# DEMANDE DE BREVET EUROPEEN

(11) **EP 4 651 353 A1**
(43) Date de publication de la demande: **19.11.2025**
(21) Numéro de dépôt: 25165041.2
(22) Date de dépôt: 20.03.2025
(51) Int. Cl.: H02M 1/36

(54) **DISPOSITIF DE COMMANDE DE PRECHARGE D'UNE CAPACITE DE STOCKAGE ET DE DETECTION DE DEFAUT DANS UN CIRCUIT A COURANT CONTINU**

(30) Priorité: 29.03.2024 FR 2403255
(71) Demandeur: STMicroelectronics International N.V., 1228 Plan-les-Ouates, Geneva (CH)
(72) Inventeur: BENABDELAZIZ, Ghafour, 37100 TOURS (FR)
(74) Mandataire: Cabinet Beaumont

(57) **Abrégé**

La présente description concerne un dispositif de commande de précharge d'une capacité de stockage et de détection de défaut dans un circuit à courant continu qui comprend la capacité de stockage, au moins une source de tension continue et au moins un premier commutateur de précharge couplé à une électrode de la capacité de stockage, le dispositif comprenant au moins :
- un transformateur d'impulsions doté d'un primaire et d'au moins un premier et un deuxième secondaires ;
- un circuit de commande de précharge de la capacité de stockage, couplé au primaire du transformateur d'impulsions ;
dans lequel le premier secondaire du transformateur d'impulsions comporte une première borne configurée pour être couplée à une entrée de commande du premier commutateur de précharge, et dans lequel le deuxième secondaire du transformateur d'impulsions est configuré pour être couplé en parallèle de la capacité de stockage.

## Description

### Domaine technique

La présente description concerne de façon générale le domaine des circuits à courant électrique continu.

### Technique antérieure

Dans un circuit électrique à courant continu, un bus comprenant au moins deux éléments électriquement conducteurs est couplé d'un côté à une source de tension continue correspondant par exemple à une batterie ou à la sortie d'un convertisseur DC/DC (ou continu - continu) ou AC/DC (ou alternatif - continu), et de l'autre à des composants du circuits incluant des éléments capacitifs pouvant être assimilés ensemble à une capacité de stockage, ou « bulk capacitor » en anglais. Cette capacité de stockage est couplée en parallèle de la source de tension continue par les éléments conducteurs du bus et par au moins un commutateur permettant de coupler ou découpler la source de tension continue vis-à-vis du bus.

Lorsque le commutateur est fermé pour coupler le bus à la source de tension continue, un important courant d'appel circule entre la source de tension continue et la capacité de stockage. Pour éviter l'apparition de ce courant d'appel, la capacité de stockage peut être préchargée en faisant circuler un courant de précharge à travers la capacité de stockage avant la fermeture du commutateur. Cette phase de précharge est mise en œuvre pendant une durée suffisante pour obtenir, aux bornes de la capacité de stockage, la tension de précharge souhaitée.

Toutefois, pendant cette phase de précharge de la capacité de stockage, si un défaut est présent sur le bus, comme par exemple un court-circuit ou une fuite importante de courant, un courant très élevé peut circuler dans le bus et endommager les autres éléments du circuit couplés au bus.

Lorsqu'un thyristor est utilisé comme commutateur pour coupler la source de tension continue au bus lors de la précharge de la capacité de stockage, en cas de défaut présent sur le circuit, il n'est pas possible de bloquer ce thyristor du fait que le courant qui le traverse est alors très élevé. Un blocage du thyristor permettant d'arrêter la circulation de ce courant élevé requiert de faire appel à un circuit supplémentaire dédié à cette fonction.

Lorsqu'un relais électromécanique est utilisé comme commutateur pour coupler la source de tension continue au bus lors de la précharge de la capacité de stockage, il est possible de détecter un court-circuit de la capacité de stockage. Néanmoins, cette détection est possible que lorsque le relais est fermé, ce qui laisse, avant cette détection, une certaine durée pendant laquelle le courant qui circule peut endommager des éléments du circuit. De plus, le délai d'ouverture d'un relais électromécanique est long et augmente avec le temps.

### Résumé de l'invention

Il existe un besoin de proposer une solution permettant de détecter la présence ou non d'un défaut dans un circuit à courant continu avant de réaliser une précharge d'une capacité de stockage du circuit en l'absence d'un tel défaut.

Un mode de réalisation pallie tout ou partie des inconvénients des solutions connues et propose dispositif de commande de précharge d'une capacité de stockage et de détection de défaut dans un circuit à courant continu qui comprend la capacité de stockage, au moins une source de tension continue et au moins un premier commutateur de précharge couplé à une électrode de la capacité de stockage, le dispositif comprenant au moins :
- un transformateur d'impulsions doté d'un primaire et d'au moins un premier et un deuxième secondaires ;
- un circuit de commande de précharge de la capacité de stockage, couplé au primaire du transformateur d'impulsions ;
dans lequel le premier secondaire du transformateur d'impulsions comporte une première borne configurée pour être couplée à une entrée de commande du premier commutateur de précharge, et dans lequel le deuxième secondaire du transformateur d'impulsions est configuré pour être couplé en parallèle de la capacité de stockage.

Dans un mode de réalisation particulier, le dispositif comprend en outre au moins une première capacité de stockage d'énergie couplée en parallèle du premier secondaire du transformateur d'impulsions.

Dans un mode de réalisation particulier, le dispositif comprend en outre au moins une première diode de redressement de tension dont l'anode est couplée à la première borne du premier secondaire du transformateur d'impulsions, et/ou au moins une première résistance électrique de limitation de courant dont une électrode est configurée pour être couplée à l'entrée de commande du premier commutateur de précharge.

Dans un mode de réalisation particulier, le dispositif comprend en outre au moins une deuxième diode Zener dont la cathode est couplée à la cathode de la première diode de redressement de tension et dont l'anode est configurée pour être couplée à l'entrée de commande du premier commutateur de précharge.

Dans un mode de réalisation particulier, le dispositif comprend en outre au moins une deuxième diode de protection couplée en série au deuxième secondaire du transformateur d'impulsions.

Dans un mode de réalisation particulier, le circuit de commande de précharge de la capacité de stockage comporte au moins :
- une troisième diode dont la cathode est couplée à une première borne du primaire du transformateur d'impulsions ;
- une première diode Zener dont l'anode est couplée à l'anode de la troisième diode et dont la cathode est couplée à une deuxième borne du primaire du transformateur d'impulsions ;
- un commutateur de commande couplé à la deuxième borne du primaire du transformateur d'impulsions.

Dans un mode de réalisation particulier, une deuxième borne du premier secondaire du transformateur d'impulsions est couplée à l'une des bornes du deuxième secondaire du transformateur d'impulsions.

Dans un mode de réalisation particulier, le transformateur d'impulsions comporte au moins un troisième secondaire dont les bornes sont configurées pour être couplées à un dispositif de mesure de tension ou à une entrée de commande d'un deuxième commutateur de précharge.

Il est également proposé un circuit à courant continu, comprenant au moins :
- une source de tension continue ;
- un bus comportant au moins deux éléments conducteurs chacun couplé à l'une des bornes de la source de tension continue ;
- un élément capacitif formant une capacité de stockage dont chacune des électrodes est couplée à l'un des deux éléments conducteurs du bus ;
- un premier commutateur de précharge couplé à une électrode de la capacité de stockage ;
- un dispositif de commande de précharge de la capacité de stockage et de détection de défaut dans le circuit à courant continu selon un mode de réalisation particulier.

Selon un mode de réalisation particulier, la source de tension continue comporte au moins une batterie.

Selon un mode de réalisation particulier, le premier commutateur de précharge comporte au moins un premier thyristor et l'entrée de commande du premier commutateur de précharge correspond à la gâchette du premier thyristor, et le circuit comporte en outre au moins :
- une deuxième résistance électrique de limitation de courant couplée en série au premier thyristor ;
- des premier et deuxième commutateurs de coupure chacun couplé entre l'une des bornes de la source de tension continue et l'une des électrodes de la capacité de stockage, au moins l'un des premier et deuxième commutateurs de coupure comportant un relais.

Selon un mode de réalisation particulier, l'un des premier et deuxième commutateurs de coupure est couplé en parallèle du premier thyristor et de la deuxième résistance électrique de limitation de courant.

Selon un mode de réalisation particulier :
- la source de tension continue comporte un convertisseur de tension AC/DC de type totem pole comprenant au moins deux transistors de conversion et au moins deux thyristors de conversion dont les gâchettes sont chacune couplées à une troisième résistance électrique de limitation de courant et un optocoupleur couplés en série l'un à l'autre et formant des premier et deuxième commutateurs de précharge ;
- le transformateur d'impulsions du dispositif comporte au moins un troisième secondaire ;
- la première borne du premier secondaire du transformateur d'impulsions du dispositif est couplée à une électrode d'entrée d'un des optocoupleurs ; et
- une première borne du troisième secondaire du transformateur d'impulsions du dispositif est couplée à une électrode d'entrée de l'autre des optocoupleurs.

Selon un mode de réalisation particulier :
- la source de tension continue comporte un convertisseur de tension AC/DC de type Boost PFC à pont mixte comprenant au moins deux diodes de conversion et au moins deux thyristors de conversion, ou au moins quatre thyristors de conversion, dont les gâchettes sont chacune couplées à une troisième résistance électrique de limitation de courant et un optocoupleur couplés en série l'un à l'autre et formant des premier et deuxième commutateurs de précharge ; et
- la première borne du premier secondaire du transformateur d'impulsions du dispositif est couplée à une électrode d'entrée de chacun des optocoupleurs.

Selon un mode de réalisation particulier :
- la source de tension continue comporte un convertisseur de tension AC/DC de type Boost PFC à pont de diodes ;
- le premier commutateur de précharge comporte au moins un premier thyristor, une troisième résistance électrique de limitation de courant et un optocoupleur couplés en série l'un à l'autre.

Il est également proposé un procédé de commande de précharge d'une capacité de stockage et de détection de défaut dans un circuit à courant continu qui comprend la capacité de stockage, au moins une source de tension continue et au moins un premier commutateur de précharge couplé à une électrode de la capacité de stockage. Ce procédé fait appel à un transformateur d'impulsions doté d'un primaire et d'au moins un premier et un deuxième secondaires, ainsi qu'à un circuit de commande de précharge de la capacité de stockage qui est couplé au primaire du transformateur d'impulsions. Dans ce procédé, le premier secondaire comporte une première borne couplée à une entrée de commande du premier commutateur de précharge, et le deuxième secondaire est couplé en parallèle de la capacité de stockage.

Dans un mode de réalisation particulier, le procédé comporte l'envoi d'un signal de commande, par le circuit de commande de précharge de la capacité de stockage, au primaire du transformateur d'impulsions. En l'absence de défaut dans le circuit à courant continu, le procédé comporte la génération de tensions aux bornes des premier et deuxième secondaires, et l'envoi d'un courant sur l'entrée de commande du premier commutateur de précharge qui déclenche la précharge de la capacité de stockage. En présence de défaut dans le circuit à courant continu, le procédé comporte le maintien d'une tension nulle ou très faible aux bornes des premier et deuxième secondaires, et le maintien à l'état bloqué du premier commutateur de précharge empêchant la précharge de la capacité de stockage.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
- la figure 1 représente schématiquement un exemple de réalisation d'un dispositif de commande de précharge d'une capacité de stockage et de détection de défaut dans un circuit à courant continu ;
- la figure 2 représente schématiquement un dispositif de commande de précharge d'une capacité de stockage et de détection de défaut dans un circuit à courant continu selon un premier mode de réalisation ;
- la figure 3 représente un chronogramme schématique de signaux obtenus au sein du dispositif de commande de précharge d'une capacité de stockage et de détection de défaut dans un circuit à courant continu selon le premier mode de réalisation, en l'absence de défaut dans le circuit ;
- la figure 4 représente un chronogramme schématique de signaux obtenus au sein du dispositif de commande de précharge d'une capacité de stockage et de détection de défaut dans un circuit à courant continu selon le premier mode de réalisation, en présence d'un défaut dans le circuit ;
- la figure 5 représente schématiquement un dispositif de commande de précharge d'une capacité de stockage et de détection de défaut dans un circuit à courant continu selon une première variante du premier mode de réalisation ;
- la figure 6 représente schématiquement un dispositif de commande de précharge d'une capacité de stockage et de détection de défaut dans un circuit à courant continu selon une deuxième variante du premier mode de réalisation ;
- la figure 7 représente schématiquement un dispositif de commande de précharge d'une capacité de stockage et de détection de défaut dans un circuit à courant continu selon un deuxième mode de réalisation ;
- la figure 8 représente schématiquement un dispositif de commande de précharge d'une capacité de stockage et de détection de défaut dans un circuit à courant continu selon un troisième mode de réalisation ; et
- la figure 9 représente schématiquement un dispositif de commande de précharge d'une capacité de stockage et de détection de défaut dans un circuit à courant continu selon un quatrième mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et/ou matérielles identiques.

Par souci de clarté, seuls les étapes et éléments utiles à la compréhension des modes et exemples de réalisation décrits ont été représentés et sont détaillés. En particulier, différents éléments (source de tension, bus, commutateurs, circuit de commande, transformateur, etc.) du dispositif de commande de précharge d'une capacité de stockage et de détection de défaut dans un circuit à courant continu ne sont pas détaillés. L'homme du métier sera à même de réaliser de manière détaillée ces éléments à partir de la description fonctionnelle donnée ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Sauf précision contraire, le terme « conducteur » est utilisé pour désigner une conduction électrique.

Dans tout le document, le terme « défaut » utilisé en lien avec le circuit à courant continu désigne un défaut électrique présent dans le circuit, par exemple un court-circuit de la capacité de stockage ou une fuite importante de courant.

Sauf précision contraire, les expressions "environ", "approximativement", "sensiblement", et "de l'ordre de" signifient à 10 % près, de préférence à 5 % près.

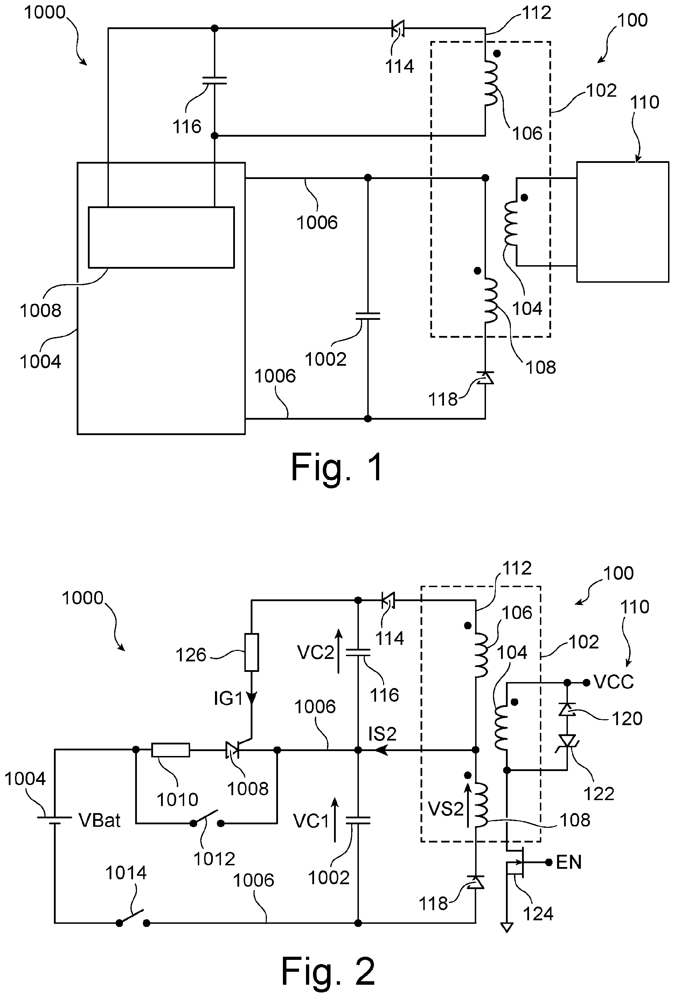

Un exemple de réalisation d'un dispositif 100 de commande de précharge d'une capacité de stockage 1002 et de détection de défaut dans un circuit à courant continu 1000 dans lequel se trouve la capacité de stockage 1002 est décrit ci-dessous en lien avec la figure 1.

Le circuit 1000 comporte au moins une source de tension continue 1004 comprenant par exemple une ou plusieurs batteries et/ou au moins un convertisseur DC/DC ou AC/DC. D'autres types de sources de tension continue peuvent toutefois être incluses dans le circuit 1000.

Le circuit 1000 comporte en outre un bus destiné à la circulation d'un courant continu dans le circuit 1000 et comprenant au moins deux éléments conducteurs 1006 chacun couplé à l'une des bornes de la source 1004. Dans l'exemple de réalisation décrit, la source 1004 est destinée à appliquer sur ces éléments conducteurs 1006 une tension électrique continue et à délivrer un courant continu circulant dans les éléments conducteurs 1006 du bus.

Le circuit 1000 comporte en outre d'autres composants électriques couplés au bus et formant un ou plusieurs éléments électriques capacitifs qui sont assimilés, ensemble, à la capacité de stockage 1002. Chacune des électrodes de la capacité de stockage 1002 est couplée à l'un des deux éléments conducteurs 1006 du bus du circuit 1000.

Le circuit 1000 comporte en outre au moins un commutateur de précharge 1008 couplé à l'une des électrodes de la capacité de stockage 1002. Sur l'exemple de la figure 1, le commutateur de précharge 1008 est inclus dans la source 1004. En variante, le commutateur de précharge 1008 peut être un élément distinct de la source 1004. Le commutateur de précharge 1008 peut être couplé entre une première borne de la source 1004 et l'une des électrodes de la capacité de stockage 1002.

Le circuit 1000 comporte en outre le dispositif 100 de commande de précharge de la capacité de stockage 1002 et de détection de défaut dans le circuit 1000.

Le dispositif 100 comporte au moins un transformateur d'impulsions 102 doté d'un primaire 104 et d'au moins un premier secondaire 106 et un deuxième secondaire 108, le primaire 104 étant couplé magnétiquement aux premier et deuxième secondaires 106, 108. Les premier et deuxième secondaires 106, 108 peuvent être similaires ou non l'un à l'autre, en termes de nombre de spires. Les caractéristiques électriques du transformateur 102 peuvent être choisies notamment en fonction des niveaux de tension et de courant auxquels sont destinés à être soumis les éléments du transformateur 102.

Le dispositif 100 comporte en outre un circuit 110 de commande de précharge de la capacité de stockage 1002, qui est couplé au primaire 104. Dans l'exemple de réalisation décrit, le circuit 110 est destiné à appliquer une tension sous la forme d'impulsions aux bornes du primaire 104 lors d'une précharge de la capacité de stockage 1002.

Le premier secondaire 106 comporte une première borne 112 couplée à une entrée de commande du commutateur de précharge 1008. Sur l'exemple de la figure 1, la première borne 112 du premier secondaire 106 est couplée à l'entrée de commande du commutateur de précharge 1008 par l'intermédiaire d'une diode de redressement de tension 114 comprenant son anode couplée à la première borne 112 et sa cathode couplée à l'entrée de commande du commutateur de précharge 1008.

Dans l'exemple de réalisation décrit, le dispositif 100 comprend en outre une capacité de stockage d'énergie 116 couplée en parallèle du premier secondaire 106 et destinée à réaliser une alimentation électrique pour contrôler le commutateur de précharge 1008. Sur l'exemple de la figure 1, la première borne 112 du premier secondaire 106 est couplée à l'une des électrodes de la capacité de stockage d'énergie 116 par l'intermédiaire de la diode de redressement de tension 114, la capacité de stockage d'énergie 116 étant ici couplée en parallèle de l'ensemble formé par le premier secondaire 106 et la diode de redressement de tension 114. Sur l'exemple de la figure 1, la cathode de la diode de redressement de tension 114 est couplée à l'une des électrodes de la capacité de stockage d'énergie 116 et l'anode de la diode de redressement de tension 114 est couplée à la première borne 112 du premier secondaire 106. Compte tenu des variations de tension aux bornes du premier secondaire 106, la diode de redressement de tension 114 permet de charger la capacité de stockage d'énergie 116 avec une tension continue et constante lorsque la tension aux bornes du premier secondaire 106 est positive.

Le deuxième secondaire 108 est couplé en parallèle de la capacité de stockage 1002. Sur l'exemple de la figure 1, le dispositif 100 comporte en outre une diode de protection 118 couplée en série au deuxième secondaire 108 et évitant que la capacité de stockage 1002 ne se décharge à travers le deuxième secondaire 108 lors d'une précharge de la capacité de stockage 1002, tout en permettant une circulation de courant entre la capacité de stockage 1002 et le deuxième secondaire 108 lors de phase de vérification de présence de défaut. Dans une configuration particulière correspondant à celle représentée sur la figure 1, la cathode de la diode de protection 118 est couplée à l'une des bornes du deuxième secondaire 108 et l'anode de la diode de protection 118 est couplée à l'une des électrodes de la capacité de stockage 1002. Sur l'exemple de la figure 1, la capacité de stockage 1002 est couplée en parallèle de l'ensemble formé par le deuxième secondaire 108 et la diode de protection 118.

Dans ce circuit 1000 comprenant le dispositif 100, lorsque la capacité de stockage 1002 est destinée à être préchargée, par exemple avant une connexion de la source 102 au bus, le circuit 110 commande le transformateur 102 tel qu'une tension sous forme d'impulsions non nulles soit appliquée aux bornes du primaire 104. En l'absence de défaut, notamment en l'absence de court-circuit aux bornes de la capacité de stockage 1002, une première tension sous forme d'impulsions non nulles est générée aux bornes du premier secondaire 106 et une deuxième tension sous forme d'impulsions non nulle est générée aux bornes du deuxième secondaire 108. La deuxième tension aux bornes du deuxième secondaire 108 charge la capacité de stockage 1002, par exemple quelques volts, et dans le même temps, la première tension présente aux bornes du premier secondaire 106 engendre un courant circulant à travers la capacité de stockage d'énergie 116 et augmentant ainsi la différence de potentiels aux bornes de la capacité de stockage d'énergie 116. Cette différence de potentiels aux bornes de la capacité de stockage d'énergie 116 engendre l'envoi d'un courant de commande sur l'entrée de commande du commutateur de précharge 1008, qui déclenche alors la précharge de la capacité de stockage 1002 lorsque le commutateur de précharge 1008 devient passant.

Par contre, en présence d'un défaut tel qu'un court-circuit aux bornes de la capacité de stockage 1002, la tension aux bornes du deuxième secondaire 108 reste nulle nonobstant la tension appliquée par le circuit 110 au primaire 104. La tension aux bornes du premier secondaire 106 reste donc également nulle. Ainsi, aucun courant ne circule pour venir charger la capacité de stockage d'énergie 116, et donc aucun courant de commande n'est envoyé sur l'entrée de commande du commutateur de précharge 1008. La précharge de la capacité de stockage 1002 n'est donc pas déclenchée du fait que le commutateur de précharge 1008 reste à l'état bloqué.

Ainsi, le transformateur 102 remplit simultanément deux fonctions : le premier secondaire 106 sert à commander l'état de conduction du commutateur de précharge 1008 en fonction de la présence ou non d'un défaut dans le circuit 1000, et le deuxième secondaire 108 sert à détecter la présence ou non d'un défaut dans le circuit 1000.

Un exemple du dispositif 100 et du circuit 1000 selon un premier mode de réalisation est décrit ci-dessous en lien avec la figure 2. Dans ce premier mode de réalisation, le circuit 1000 peut faire partie ou former un système de contrôle de batterie de véhicule.

Dans le premier mode de réalisation, la source 1004 comporte une ou plusieurs batteries délivrant une tension continue *VBat.* Par exemple, la ou les batteries de la source 1004 peut ou peuvent correspondre à celle(s) d'un véhicule électrique, la tension délivrée aux bornes de la source 1004 pouvant être égale à environ 400 V ou 800 V ou d'une autre valeur.

Sur l'exemple de la figure 2, le circuit 110 comporte au moins :
- une diode 120 dont la cathode est couplée à une première borne du primaire 104 ;
- une diode Zener 122 dont l'anode est couplée à l'anode de la diode 120 et dont la cathode est couplée à une deuxième borne du primaire 104 ;
- un commutateur de commande 124 configuré pour commander les impulsions de tension appliquées aux bornes du primaire 104.

Les diodes 120, 122 forment un circuit de démagnétisation du transformateur 102. Dans une première phase, le commutateur de commande 124 est fermé et un courant circule alors dans le primaire 104. Lorsque le primaire 104 est bloqué via l'ouverture du commutateur de commande 124, l'énergie stockée dans le transformateur 102 doit être évacuée. Une surtension apparait alors au niveau de la borne du commutateur de commande 124 couplée au primaire 104. La diode Zener 122 permet d'écrêter cette surtension et protéger le primaire 104. La diode 120 permet alors une circulation du courant entre la diode Zener 122, la diode 120 et le primaire 104 lors de cette phase.

Sur l'exemple de la figure 2, le commutateur de commande 124 comporte un transistor de type MOSFET. L'une des électrodes de source ou de drain de ce transistor peut être couplée à la deuxième borne du primaire 104 et l'autre électrode de source ou de drain de ce transistor peut être couplée à un potentiel électrique de référence. Sur l'exemple de la figure 2, ce transistor est de type N et son électrode couplée à la deuxième borne du primaire 104 correspond à son drain. En présence d'un défaut dans le circuit 1000, ce transistor se comporte comme une source de courant (régime de saturation) mais en l'absence de défaut, ce transistor se comporte comme un interrupteur passant / bloqué. Par exemple, et en fonction des caractéristiques du transistor, la valeur de ce courant peut être limitée entre environ 150 mA et 200 mA pour une tension *VGS* de l'ordre de 4 V, ou bien être limitée entre environ 450 mA et 500 mA pour une tension *VGS* de l'ordre de 5 V.

Sur l'exemple de la figure 2, une tension continue *VCC* est appliquée sur la première borne du primaire 104. Ainsi, cette tension *VCC* se retrouve appliquée aux bornes du primaire 104 lorsque le commutateur de commande 124 est passant. L'état passant ou bloqué du commutateur de commande 124 est commandé par un signal de commande impulsionnel EN qui, sur l'exemple de la figure 2, est appliqué sur la grille du transistor formant le commutateur de commande 124. La tension *VCC* est donc appliquée sur le primaire 104 à la fréquence des impulsions du signal de commande impulsionnel *EN*. Par exemple, la tension *VCC* peut être égale à 5 V, et la fréquence du signal de commande impulsionnel *EN* peut être égale à 10 kHz.

Sur l'exemple de la figure 2, une deuxième borne du premier secondaire 106 est couplée à l'une des bornes du deuxième secondaire 108. En variante, il est possible que ces bornes ne soient pas couplées l'une à l'autre.

Sur l'exemple de la figure 2, le dispositif 100 comporte en outre une première résistance électrique de limitation de courant 126 dont une électrode est couplée à l'entrée de commande du commutateur de précharge 1008. Sur la figure 2, l'autre électrode de la résistance 126 est couplée à la cathode de la diode de redressement de tension 114 et à l'une des électrodes de la capacité de stockage d'énergie 116. La valeur de cette première résistance électrique de limitation de courant 126 peut être choisie en fonction de la valeur du courant envoyé sur l'entrée de commande du commutateur de précharge 1008. En variante, le dispositif 100 peut ne pas comporter cette résistance 126.

Dans l'exemple de réalisation décrit, le commutateur de précharge 1008 comporte au moins un thyristor et l'entrée de commande du commutateur de précharge 1008 correspond à la gâchette de ce thyristor. En variante, d'autres types de commutateurs peuvent être utilisés pour former le commutateur de précharge 1008, comme par exemple un TRIAC (triode pour courant alternatif), un relais, un transistor, etc.

En outre, dans l'exemple de réalisation représenté sur la figure 2, le circuit 1000 comporte également une deuxième résistance électrique de limitation de courant 1010 couplée en série au commutateur de précharge 1008 (à l'anode du thyristor sur l'exemple de la figure 2). Cette résistance 1010 est destinée à limiter le courant circulant entre la source 1004 et la capacité de stockage 1002, et donc à limiter le courant de précharge de la capacité de stockage 1002. Par exemple, la valeur de la deuxième résistance électrique de limitation de courant 1010 peut être égale à 100 Ohms. En variante, la deuxième résistance électrique de limitation de courant 1010 peut être une thermistance de type PTC (« Positive Temperature Coefficient » en anglais, ou coefficient de température positif).

Dans le premier mode de réalisation, le circuit 1000 comporte en outre des premier et deuxième commutateurs de coupure 1012, 1014 chacun couplé entre l'une des bornes de la source 1004 et l'une des électrodes de la capacité de stockage 1002. Ces premier et deuxième commutateurs de coupure 1012, 1014 sont destinés à coupler la source 1004 au bus du circuit 1000. Afin de pouvoir assurer une coupure physique entre la source 1004 et le bus du circuit 1000, au moins l'un des premier et deuxième commutateurs de coupure 1012, 1014 comporte un relais, par exemple électromécanique. Par exemple, les premier et deuxième commutateurs de coupure 1012, 1014 peuvent tous les deux correspondre à des relais, ou bien l'un des deux commutateurs de coupure 1012, 1014 peut correspondre à un relais et l'autre des deux commutateurs de coupure 1012, 1014 peut correspondre à un commutateur semi-conducteur tel qu'un transistor.

Sur l'exemple de la figure 2, le premier commutateur de coupure 1012 est couplé en parallèle du commutateur de précharge 1008 et de la résistance 1010. Lors de la précharge de la capacité de stockage 1002, le premier commutateur de coupure 1012 est à l'état bloqué ou ouvert, et le deuxième commutateur de coupure 1014 est à l'état passant ou fermé.

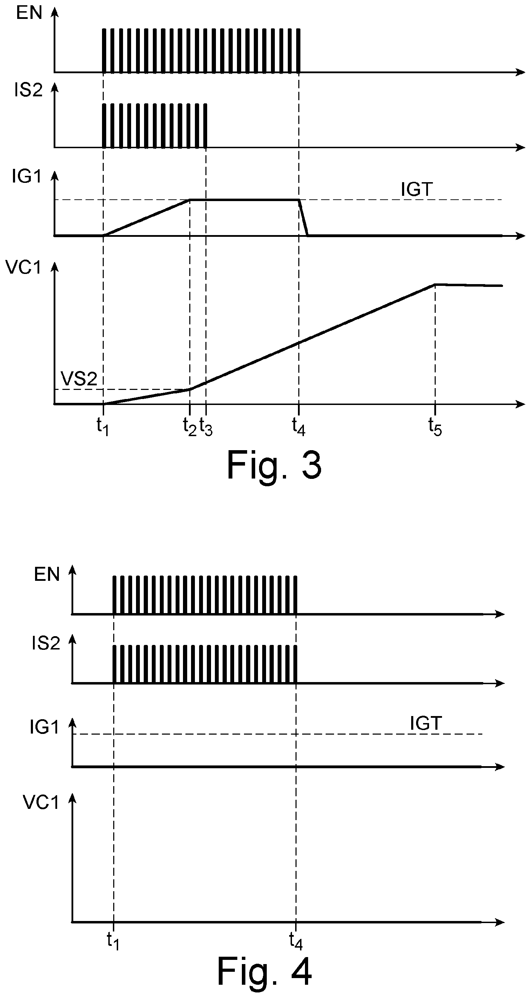

La figure 3 représente un exemple schématique de chronogramme de signaux obtenus au sein du circuit 1000 selon le premier mode de réalisation précédemment décrit, en l'absence de court-circuit de la capacité de stockage 1002. Sur cette figure, les signaux sont représentés schématiquement avec des amplitudes qui ne sont pas à l'échelle les unes par rapport aux autres.

Sur la figure 3, le signal de commande impulsionnel *EN* est appliqué sur l'entrée de commande du circuit 110 (correspondant à la grille du transistor formant le commutateur de commande 124 sur l'exemple de la figure 2) entre des instants *t1* et *t4*. Du fait de l'absence de court-circuit de la capacité de stockage 1002, la tension impulsionnelle aux bornes du primaire 104 entraine la génération de tensions impulsionnelles non nulles aux bornes des premier et deuxième secondaires 106, 108, qui engendrent à leur tour la circulation d'un courant impulsionnel *IS2* depuis le deuxième secondaire 108 à travers la capacité de stockage 1002 et une augmentation de l'amplitude d'un courant de commande *IG1* envoyé sur l'entrée de commande du commutateur de précharge 1008 (correspondant à la gâchette du thyristor formant le commutateur de précharge 1008 sur l'exemple de la figure 2).

Sur la figure 3, l'instant t2 correspond à l'instant à partir duquel le thyristor formant le commutateur de précharge 1008 devient passant, du fait que le courant *IG1* atteint une valeur *IGT* déclenchant l'amorçage du thyristor. Entre les instants *t1* et *t2*, une augmentation de la tension *VC1* aux bornes de la capacité de stockage 1002 est due au courant délivré depuis le deuxième secondaire 108. A partir de l'instant *t2*, la tension *VC1* augmente de manière plus importante du fait que le commutateur de précharge 1008 est à l'état passant et que la source 1004 est couplée à la capacité de stockage 1002 par l'intermédiaire de la résistance 1010 et du commutateur de précharge 1008. A partir de l'instant *t3*, dès que le tension *VC1* devient supérieure à la tension délivrée par le deuxième secondaire 108, le courant *IS2* est nul et la capacité de stockage 1002 se charge jusqu'à atteindre la valeur de la tension *VBat* de la source 1004 à l'instant *t5*. A l'instant *t4* à partir duquel le signal de commande *EN* appliqué sur l'entrée de commande du commutateur de commande 124 est stoppé du fait que le thyristor formant le commutateur de précharge 1008 est à l'état passant, le courant *IG1* chute jusqu'à devenir nul. A partir de l'instant t5, la capacité de stockage 1002 est préchargée et la source 1004 peut être connectée au bus en fermant le premier commutateur de coupure 1012 pour limiter les pertes dues à la résistance 1010 pendant le fonctionnement à l'état stationnaire du dispositif 100.

La figure 4 représente un exemple schématique de chronogramme de signaux obtenus au sein du dispositif 100 selon le premier mode de réalisation précédemment décrit, en présence de court-circuit de la capacité de stockage 1002. Sur cette figure, les signaux sont représentés schématiquement avec des amplitudes qui ne sont pas à l'échelle les unes par rapport aux autres.

Comme sur la figure 3, le signal de commande impulsionnel *EN* est appliqué sur l'entrée de commande du circuit 110 entre les instants *t1* et *t4*. En raison du court-circuit présent aux bornes de la capacité de stockage 1002, la tension aux bornes de la capacité de stockage 1002 reste nulle. La tension aux bornes du deuxième secondaire 108 est donc également nulle, ce qui implique que la tension aux bornes du premier secondaire 106 est également nulle. Aucun courant de commande n'est donc envoyé sur l'entrée de commande du commutateur de précharge 1008 qui reste donc à l'état bloqué ou ouvert.

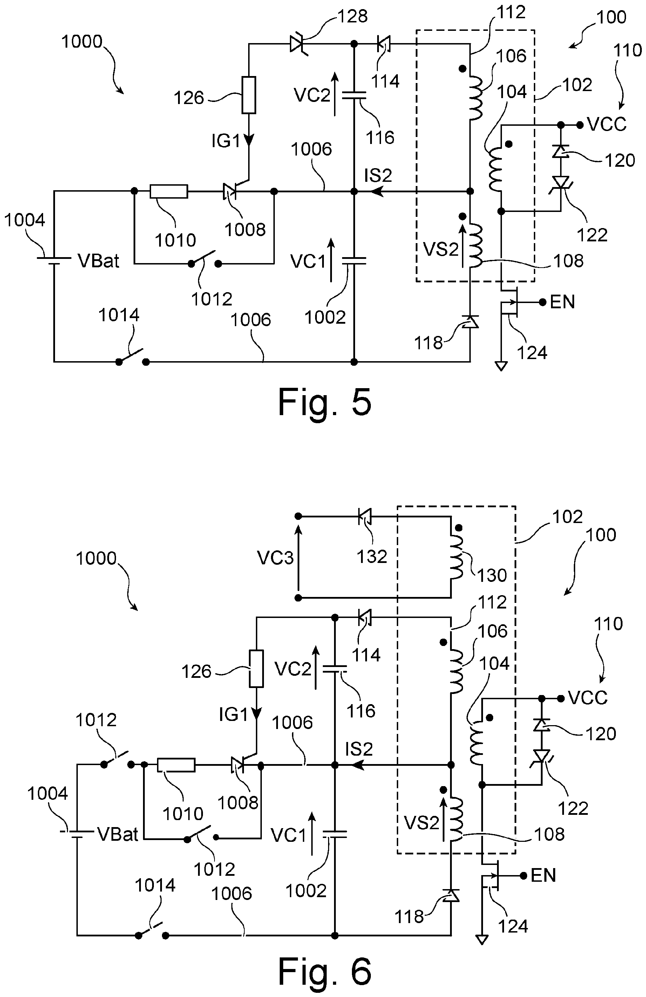

Un exemple du dispositif 100 et du circuit 1000 selon une première variante du premier mode de réalisation est décrit ci-dessous en lien avec la figure 5.

Dans cette première variante, le dispositif 100 et le circuit 1000 comportent tous les éléments et composants précédemment décrits en lien avec la figure 2. Le dispositif 100 selon cette première variante comporte en outre une deuxième diode Zener 128 dont la cathode est couplée à la cathode de la diode de redressement de tension 114 et à l'une des électrodes de la capacité de stockage d'énergie 116, et dont l'anode est couplée à l'entrée de commande du commutateur de précharge 1008, c'est-à-dire la gâchette du thyristor formant ce commutateur de précharge 1008 dans l'exemple décrit.

Cette première variante de réalisation peut être avantageuse en présence d'un court-circuit formant une charge couplée en parallèle de la capacité de stockage 1002 et engendrant un courant de fuite important du circuit 1000, par exemple de l'ordre d'une dizaine d'Ohms ou moins. En effet, en présence d'un tel court-circuit et en l'absence de la deuxième diode Zener 128, des tensions non nulles peuvent être obtenues aux bornes de chacun des secondaires 106, 108 et aux bornes de la diode de redressement de tension 114 lorsqu'une tension est appliquée aux bornes du primaire 104. Dans un tel cas de figure, les amplitudes des tensions obtenues aux bornes des secondaires 106, 108 dépendent notamment de l'amplitude du courant circulant à travers la charge formée par le court-circuit et du rapport du nombre de spires des secondaires 106, 108. Un courant de commande non nul, par exemple de quelques mA, peut alors être envoyé sur l'entrée de commande du commutateur de précharge 1008, ce qui peut déclencher sa mise à l'état passant et donc la précharge de la capacité de stockage 1002. Lorsque le dispositif 100 comporte la deuxième diode Zener 128, un tel courant de commande est bloqué par la deuxième diode Zener 128, empêchant ainsi la mise à l'état passant du commutateur de précharge 1008 et donc la précharge de la capacité de stockage 1002, le seuil de la deuxième diode Zener 128 dépendant du niveau de courant de fuite de court-circuit.

Les différentes configurations précédemment décrites en lien avec la figure 2 peuvent s'appliquer à cette première variante de premier mode de réalisation.

Un exemple du dispositif 100 et du circuit 1000 selon une deuxième variante du premier mode de réalisation est décrit ci-dessous en lien avec la figure 6.

Dans cette deuxième variante, le dispositif 100 et le circuit 1000 comportent tous les éléments et composants précédemment décrits en lien avec la figure 2, avec toutefois le transformateur 102 qui comporte au moins un troisième secondaire 130 dont les bornes sont configurées pour être couplées à un dispositif de mesure de tension (non représenté sur la figure 6) correspondant par exemple à un microcontrôleur. Sur l'exemple de la figure 6, une deuxième diode de redressement de tension 132 est couplée à l'une des bornes du troisième secondaire 130 et permet de bloquer la tension du troisième secondaire 130 lorsque celle-ci est négative, permettant ainsi au dispositif de mesure de tension de ne mesurer qu'une tension positive.

Cette deuxième variante peut avoir pour avantage de permettre une mesure de la tension d'un des secondaires du transformateur 102, de manière isolée et sans avoir à connecter un dispositif de mesure de tension aux premier et deuxième secondaires 106, 108. Dans une configuration particulière, le troisième secondaire 130 peut avoir un nombre de spires similaire à celui du premier secondaire 106, ce qui permet d'avoir aux bornes du troisième secondaire 130 une tension de valeur similaire à celle obtenue aux bornes du premier secondaire 106. Une mesure d'une tension nulle (ou très faible) aux bornes du troisième secondaire 130 peut donc signifier qu'un court-circuit est présent dans le circuit 1000, en particulier aux bornes de la capacité de stockage 1002.

Les différentes configurations précédemment décrites en lien avec la figure 2 peuvent s'appliquer à cette deuxième variante de premier mode de réalisation. De plus, les première et deuxièmes variantes de réalisation décrites ci-dessus peuvent être combinées l'une avec l'autre, le dispositif 100 comportant dans ce cas la deuxième diode Zener 128 et un transformateur d'impulsions 102 comprenant au moins trois secondaires 106, 108 et 130.

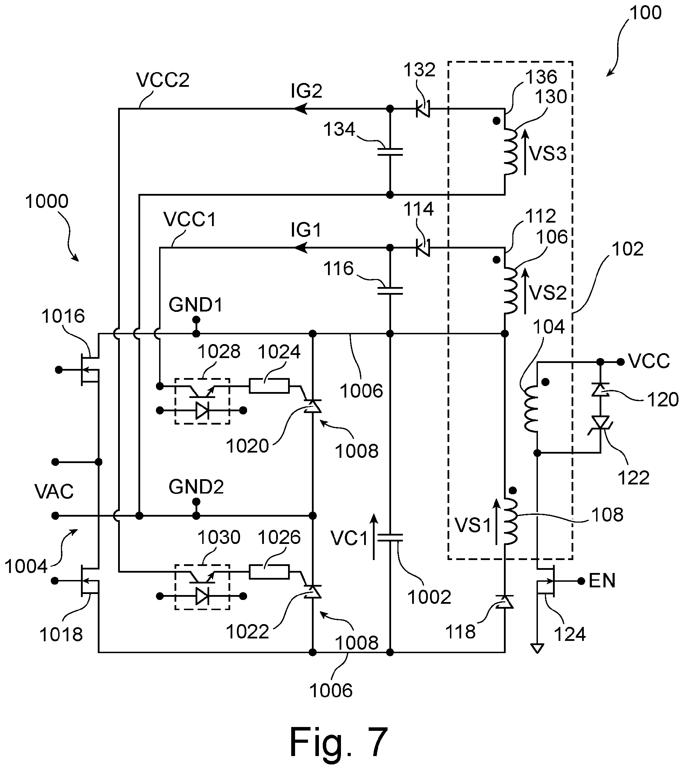

Un exemple du dispositif 100 et du circuit 1000 selon un deuxième mode de réalisation est décrit ci-dessous en lien avec la figure 7. Dans ce deuxième mode de réalisation, le circuit 1000 peut faire partie ou former un convertisseur de puissance.

Dans ce deuxième mode de réalisation, la source 1004 comporte un convertisseur de tension AC/DC (la tension alternative d'entrée est appelée VAC sur la figure 7) de type totem pole comprenant au moins un premier bras comportant deux transistors de conversion 1016, 1018, par exemple de type MOS, et au moins un deuxième bras comportant deux thyristors de conversion 1020, 1022. Les gâchettes des deux thyristors 1020, 1022 sont couplées chacune à une résistance électrique de limitation de courant 1024, 1026 et un optocoupleur 1028, 1030 couplés en série l'un à l'autre. Dans l'exemple de réalisation décrit, chaque ensemble comprenant l'un des thyristors 1020, 1022, l'une des résistances 1024, 1026 et l'un des optocoupleurs 1028, 1030 forme un commutateur de précharge 1008 configuré pour être passant lors de la précharge de la capacité de stockage 1002.

En variante, il est possible que les transistors 1016 et 1018 soient de type IGBT (transistor bipolaire à grille isolée) .

Dans ce deuxième mode de réalisation, le transformateur 102 comporte, en plus des premier et deuxième secondaires 106, 108, un troisième secondaire 130 dont une première borne 136 est couplée à la deuxième diode de redressement de tension 132. Dans l'exemple décrit, le dispositif 100 comprend en outre une deuxième capacité de stockage d'énergie 134 couplée en parallèle du troisième secondaire 130. Sur l'exemple de la figure 1, la première borne 136 du troisième secondaire 130 est couplée à l'une des électrodes de la deuxième capacité de stockage d'énergie 134 par l'intermédiaire la deuxième diode de redressement de tension 132, la deuxième capacité de stockage d'énergie 134 étant ici couplée en parallèle de l'ensemble formé par le troisième secondaire 130 et la deuxième diode de redressement de tension 132. Sur l'exemple de la figure 7, la cathode de la deuxième diode de redressement de tension 132 est couplée à l'une des électrodes de la deuxième capacité de stockage d'énergie 134 et l'anode de la deuxième diode de redressement de tension 132 est couplée à la première borne 136 du troisième secondaire 130.

La première borne 112 du premier secondaire 106 est couplée, par l'intermédiaire de la première diode de redressement de tension 114, à l'entrée de commande d'un des commutateurs de précharge 1008 formée par une électrode d'entrée de l'optocoupleur 1028, et la première borne 136 du troisième secondaire 130 est couplée, par l'intermédiaire de la deuxième diode de redressement de tension 132, à l'entrée de commande de l'autre des commutateurs de précharge 1008 formée par une électrode d'entrée de l'optocoupleur 1030.

Le fonctionnement du dispositif 100 et du circuit 1000 selon le deuxième mode de réalisation est sensiblement similaire à celui précédemment décrit pour le dispositif 100 et le circuit 1000 selon le premier mode de réalisation. En présence d'un court-circuit de la capacité de stockage 1002, les tensions aux bornes de chacun des secondaires 106, 108, 130 sont nulles, et aucun courant de commande n'est envoyé sur les électrodes d'entrée des optocoupleurs 1028, 1030. En l'absence de court-circuit de la capacité de stockage 1002, les tensions aux bornes de chacun des secondaires 106, 108, 130 sont non nulles, et des courants de commande non nuls sont alors envoyés sur les électrodes d'entrée des optocoupleurs 1028, 1030, déclenchant ainsi la mise à l'état passant des thyristors 1020, 1022 via la circulation d'un courant dans les gâchettes des thyristors 1020, 1022, et la précharge de la capacité de stockage 1002.

En variante de ce deuxième mode de réalisation, le dispositif 100 peut comporter, comme dans la première variante du premier mode de réalisation précédemment décrite, des diodes Zener dont la cathode est couplée à la cathode des diodes de redressement de tension 114, 132 et dont l'anode est couplée à l'électrode d'entrée de chacun des optocoupleurs 1028, 1030. Il est également possible que le transformateur d'impulsion 102 comporte, comme dans la deuxième variante du premier mode de réalisation précédemment décrite, un quatrième secondaire dont les bornes sont configurées pour être couplées à un dispositif de mesure de tension.

Les différentes configurations précédemment décrites en lien avec le premier mode de réalisation peuvent s'appliquer au dispositif 100 et au circuit 1000 selon le deuxième mode de réalisation.

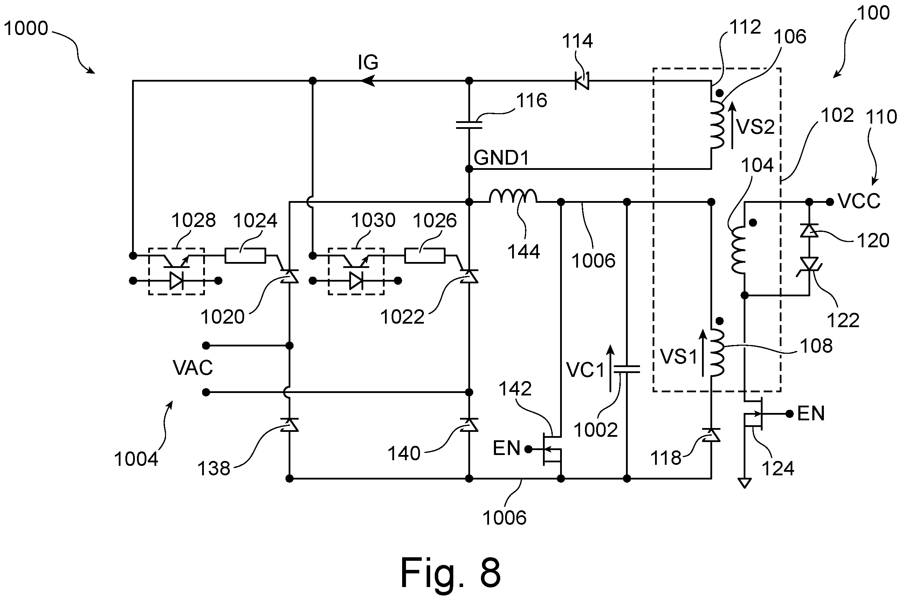

Un exemple du dispositif 100 et du circuit 1000 selon un troisième mode de réalisation est décrit ci-dessous en lien avec la figure 8. Dans ce troisième mode de réalisation, le circuit 1000 peut faire partie ou former un convertisseur de puissance.

Dans ce troisième mode de réalisation, la source 1004 comporte un convertisseur de tension AC/DC de type Boost PFC (« Power Factor Correction » en anglais, ou à correction de facteur de puissance) à pont mixte comprenant au moins deux diodes de conversion 138, 140 et deux thyristors de conversion 1020, 1022. Les gâchettes des deux thyristors 1020, 1022 sont couplées chacune à une résistance électrique de limitation de courant 1024, 1026 et un optocoupleur 1028, 1030 couplés en série l'un à l'autre. Comme dans le deuxième mode de réalisation précédemment décrit, chaque ensemble comprenant l'un des thyristors 1020, 1022, l'une des résistances 1024, 1026 et l'un des optocoupleurs 1028, 1030 forme un commutateur de précharge 1008 configuré pour être passant lors de la précharge de la capacité de stockage 1002.

En variante, il est possible que les diodes de conversion 138, 140 soient remplacées par des thyristors.

La première borne 112 du premier secondaire 106 est couplée, par l'intermédiaire de la diode de redressement de tension 114, à l'entrée de commande des commutateurs de précharge 1008 formée par une électrode d'entrée de chacun des optocoupleurs 1028, 1030. Ainsi, le courant issu du premier secondaire 106 est destiné à former le courant de commande du commutateur de précharge 1008.

Sur l'exemple de la figure 8, le circuit 1000 comporte en outre un transistor 142 de type MOSFET, par exemple similaire au transistor 124 du circuit 110. Le signal de commande impulsionnel EN est appliqué sur la grille de ce transistor 142. Les électrodes de source et de drain de ce transistor 142 sont couplées aux électrodes de la capacité de stockage 1002 de telle sorte que le transistor 142 soit couplé en parallèle de la capacité de stockage 1002. En outre, une inductance 144 est couplée à l'une des électrodes de la capacité de stockage 1002.

Lorsque le transistor 142 est passant, un courant circule dans l'inductance 144 qui accumule alors de l'énergie. Lorsque le transistor 142 est bloqué, l'énergie accumulée dans l'inductance 144 est envoyée dans la capacité de stockage 1002. Le transistor 142 peut être commandé tel que le courant du secteur soit sinusoïdal et en phase avec la tension secteur grâce à une régulation réalisée via ce transistor 142.

Le fonctionnement du dispositif 100 et du circuit 1000 selon le troisième mode de réalisation est sensiblement similaire à celui précédemment décrit pour le dispositif 100 et le circuit 1000 selon les premier et deuxième modes de réalisation. En présence d'un court-circuit de la capacité de stockage 1002, les tensions aux bornes de chacun des secondaires 106, 108 sont nulles, et aucun courant de commande n'est envoyé sur les électrodes d'entrée des optocoupleurs 1028, 1030. En l'absence de court-circuit de la capacité de stockage 1002, les tensions aux bornes de chacun des secondaires 106, 108 sont non nulles, et un courant de commande non nul est alors envoyé sur les électrodes d'entrée des optocoupleurs 1028, 1030, déclenchant ainsi la mise à l'état passant des thyristors 1020, 1022 via la circulation d'un courant dans les gâchettes des thyristors 1020, 1022 et la précharge de la capacité de stockage 1002.

En variante de ce troisième mode de réalisation, le dispositif 100 peut comporter, comme dans la première variante du premier mode de réalisation précédemment décrite, une diode Zener dont la cathode est couplée à la cathode de la diode de redressement de tension 114 et dont l'anode est couplée à l'électrode d'entrée de chacun des optocoupleurs 1028, 1030. Il est également possible que le transformateur d'impulsion 102 comporte, comme dans la deuxième variante du premier mode de réalisation précédemment décrite, un quatrième secondaire dont les bornes sont configurées pour être couplées à un dispositif de mesure de tension.

Les différentes configurations précédemment décrites en lien avec les premier et deuxième modes de réalisation peuvent s'appliquer à au dispositif 100 et au circuit 1000 selon le troisième mode de réalisation.

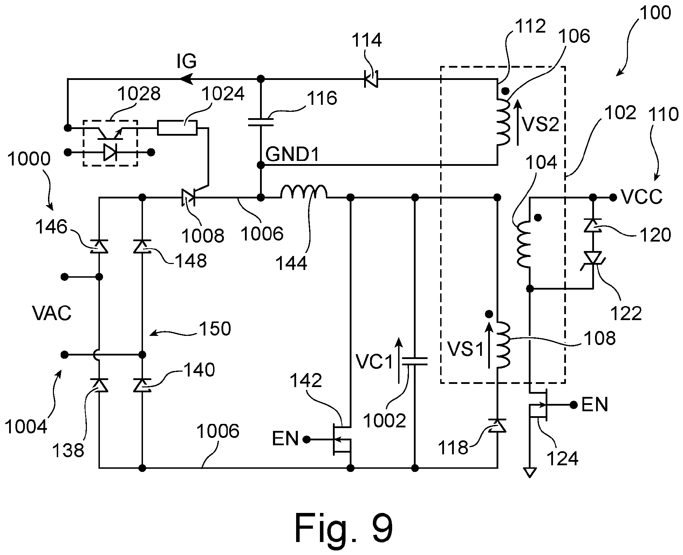

Un exemple du dispositif 100 et du circuit 1000 selon un quatrième mode de réalisation est décrit ci-dessous en lien avec la figure 9**.** Dans ce quatrième mode de réalisation, le circuit 1000 peut faire partie ou former un convertisseur de puissance.

Dans ce quatrième mode de réalisation, la source 1004 comporte un convertisseur de tension AC/DC de type Boost PFC comprenant au moins un pont de diodes 150 (sur la figure 9, quatre diodes de conversion formant le pont de diodes 150 sont référencées 138, 140, 146 et 148).

Dans ce quatrième mode de réalisation, le commutateur de précharge 1008, configuré pour être passant lors de la précharge de la capacité de stockage 1002, comporte un thyristor dont la gâchette, formant l'entrée de commande du commutateur de précharge 1008, est couplée à une résistance de limitation de courant 1024 et un optocoupleur 1028.

Les autres éléments du dispositif 100 et du circuit 1000 sont similaires à ceux précédemment décrits en lien avec le troisième mode de réalisation.

Le fonctionnement du dispositif 100 et du circuit 1000 selon ce quatrième mode de réalisation est sensiblement similaire à celui précédemment décrit pour le dispositif 100 et le circuit 1000 selon les précédents modes de réalisation. En présence d'un court-circuit de la capacité de stockage 1002, les tensions aux bornes de chacun des secondaires 106, 108 sont nulles, et aucun courant de commande n'est envoyé sur l'électrode d'entrée de l'optocoupleur 1028. En l'absence de court-circuit de la capacité de stockage 1002, les tensions aux bornes de chacun des secondaires 106, 108 sont non nulles, et un courant de commande non nul est alors envoyé sur l'électrode d'entrée de l'optocoupleur 1028, déclenchant ainsi la mise à l'état passant du thyristor formant le commutateur de charge 1008 via la circulation d'un courant dans sa gâchette et la précharge de la capacité de stockage 1002.

Dans tous les modes, exemples et variantes de réalisation, le ou les thyristors, ou SCR (« Silicon Controlled Rectifier » en anglais), servant à former le ou les commutateurs de charge 1008 peut ou peuvent être remplacés par d'autres types de commutateur, comme par exemple des TRIACs, des relais ou bien des transistors.

Dans les deuxième, troisième et quatrième modes de réalisation précédemment décrits, la source 1004 comporte un convertisseur AC/DC. En variante, il est possible que la source 1004 comporte un convertisseur DC/DC, ou bien un transformateur tel qu'un convertisseur Flyback.

En variante de l'exemple de réalisation du circuit de commande de précharge 110 précédemment décrit dans les différents modes de réalisation, il est possible que le circuit 110 comporte un microcontrôleur et/ou un DSP pour contrôler le primaire 104 du transformateur d'impulsions 102.

Les valeurs des différents éléments précédemment décrits peuvent être différentes des exemples précédemment cités, ces valeurs étant fonction notamment des applications et de l'environnement de fonctionnement du dispositif 100 et du circuit 1000.

Le dispositif 100 permet d'améliorer la protection du circuit à courant continu 1000 en utilisant un transformateur d'impulsions 102 pour détecter, grâce à l'un des secondaires du transformateur 102, un éventuel défaut dans le circuit 1000 tel qu'un court-circuit de la capacité de stockage 1002, et pour permettre ou non, après la détection ou non d'un défaut et grâce à l'autre ou les autres secondaires du transformateur 102, la précharge de la capacité de stockage 1002. Les fonctions de détection de court-circuit et de contrôle de précharge sont donc mises en œuvre en même temps, à partir d'un même transformateur d'impulsions.

Par exemple, lorsqu'un thyristor est utilisé comme commutateur de précharge, le dispositif 100 peut par exemple éviter un amorçage du thyristor en présence d'un court-circuit de la capacité de stockage 1002 ou d'un défaut tel que qu'une fuite dans le circuit 1000. Lorsqu'un relais est utilisé comme commutateur de précharge, le dispositif 100 permet de réaliser une détection de court-circuit ou de défaut dans le circuit 1000 sans avoir à fermer le relais pour réaliser cette détection.

Le dispositif 100 permet une détection rapide d'un défaut de court-circuit ou de fuite dans le circuit à courant continu 1000. En outre, le dispositif 100 ne requiert pas de circuit dédié uniquement au blocage du commutateur de précharge.

Le dispositif 100 peut être utilisé en particulier dans des systèmes de contrôle de batterie (ou BMS pour « Battery Management System » en anglais), des véhicules électriques, ou bien encore dans des structures de conversion de puissance par exemple de type totem pole, des ponts mixtes, etc.

Le dispositif est par exemple destiné à l'industrie automobile. L'électrification des véhicules automobiles génère un niveau de contenu électronique de plus en plus élevé dans les véhicules. Le dispositif comprend par exemple des thyristors, des redresseurs, des diodes de suppression des tensions transitoires à haute tension, des modules, etc. destinés à être incorporés dans lesdits véhicules. L'automatisation de la conduite génère également un contenu électronique de plus en plus important dans les véhicules. Le dispositif comprend par exemple des diodes de suppression des tensions transitoires à haute tension, une protection contre les décharges électromagnétiques et des filtres de mode commun pour protéger contre les risques électriques dans l'électronique complexe émergente.

Le dispositif peut par exemple être utilisé dans le domaine industriel. Plus particulièrement, le dispositif vise par exemple à être utilisé pour le développement des énergies vertes ou pour l'électrification d'infrastructures, par exemple pour des bornes de recharge ou pour l'incorporation d'énergie solaire. Le dispositif est par exemple destiné à être mis en œuvre dans les circuits de puissance et d'énergie d'équipements, comprenant par exemple des thyristors 800V ou 1200V, des diodes 1200V ultrarapides et au carbure de silicium, des diodes de suppression des tensions transitoires, et des protections contre les décharges électromagnétiques. Le dispositif peut également être utilisé dans la mise en œuvre de centres de données et de serveurs. Le dispositif comprend par exemple des matériaux à large bande interdite.

Le dispositif est par exemple destiné à être utilisé dans des équipements de communication, ou dans des ordinateurs et des périphériques. Par exemple, le dispositif peut être utilisé dans les infrastructures 5G et les centres de données dédiés. Le dispositif comprend par exemple des diodes en carbure de silicium, des transistors Schottky de puissance, des protections contre les décharges électromagnétiques et des diodes de suppression des tensions transitoires. Le dispositif peut également être utilisé dans les satellites, comprenant par exemple des dispositifs passifs intégrés pour les applications de radiofréquence.

Le dispositif peut être utilisé pour tout type de convertisseur AC/DC ou DC/DC.

La solution décrite peut servir à la commande de tout type de commutateur de précharge : thyristor, MOSFET, relais, IGBT, etc.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Dispositif (100) de commande de précharge d'une capacité de stockage (1002) et de détection de défaut dans un circuit à courant continu (1000) qui comprend la capacité de stockage (1002), au moins une source de tension continue (1004) et au moins un premier commutateur de précharge (1008) couplé à une électrode de la capacité de stockage (1002), le dispositif (100) comprenant au moins :
- un transformateur d'impulsions (102) doté d'un primaire (104) et d'au moins un premier et un deuxième secondaires (106, 108) ;
- un circuit (110) de commande de précharge de la capacité de stockage (1002), couplé au primaire (104) du transformateur d'impulsions (102) ;
dans lequel le premier secondaire (106) du transformateur d'impulsions (102) comporte une première borne (112) configurée pour être couplée à une entrée de commande du premier commutateur de précharge (1008), et dans lequel le deuxième secondaire (108) du transformateur d'impulsions (102) est configuré pour être couplé en parallèle de la capacité de stockage (1002).

2. Dispositif (100) selon la revendication 1, comprenant en outre au moins une première capacité de stockage d'énergie (116) couplée en parallèle du premier secondaire (106) du transformateur d'impulsions (102).

3. Dispositif (100) selon l'une quelconque des revendications précédentes, comprenant en outre au moins une première diode de redressement de tension (114) dont l'anode est couplée à la première borne (112) du premier secondaire (106) du transformateur d'impulsions (102), et/ou au moins une première résistance électrique de limitation de courant (126) dont une électrode est configurée pour être couplée à l'entrée de commande du premier commutateur de précharge (1008).

4. Dispositif (100) selon la revendication 3, comprenant en outre au moins une deuxième diode Zener (128) dont la cathode est couplée à la cathode de la première diode de redressement de tension (114) et dont l'anode est configurée pour être couplée à l'entrée de commande du premier commutateur de précharge (1008).

5. Dispositif (100) selon l'une quelconque des revendications précédentes, comprenant en outre au moins une deuxième diode de protection (118) couplée en série au deuxième secondaire (108) du transformateur d'impulsions (102).

6. Dispositif (100) selon l'une quelconque des revendications précédentes, dans lequel le circuit (110) de commande de précharge de la capacité de stockage (1002) comporte au moins :
- une troisième diode (120) dont la cathode est couplée à une première borne du primaire (104) du transformateur d'impulsions (102) ;
- une première diode Zener (122) dont l'anode est couplée à l'anode de la troisième diode (120) et dont la cathode est couplée à une deuxième borne du primaire (104) du transformateur d'impulsions (102) ;
- un commutateur de commande (124) couplé à la deuxième borne du primaire (104) du transformateur d'impulsions (102).

7. Dispositif (100) selon l'une quelconque des revendications précédentes, dans lequel une deuxième borne du premier secondaire (106) du transformateur d'impulsions (102) est couplée à l'une des bornes du deuxième secondaire (108) du transformateur d'impulsions (102).

8. Dispositif (100) selon l'une quelconque des revendications précédentes, dans lequel le transformateur d'impulsions (102) comporte au moins un troisième secondaire (130) dont les bornes sont configurées pour être couplées à un dispositif de mesure de tension ou à une entrée de commande d'un deuxième commutateur de précharge (1008).

9. Circuit à courant continu (1000), comprenant au moins :
- une source de tension continue (1004) ;
- un bus comportant au moins deux éléments conducteurs (1006) chacun couplé à l'une des bornes de la source de tension continue (1004) ;
- un élément capacitif formant une capacité de stockage (1002) dont chacune des électrodes est couplée à l'un des deux éléments conducteurs (1006) du bus ;
- un premier commutateur de précharge (1008) couplé à une électrode de la capacité de stockage (1002) ;
- un dispositif (100) de commande de précharge de la capacité de stockage (1002) et de détection de défaut dans le circuit à courant continu (1000) selon l'une quelconque des revendications précédentes.

10. Circuit à courant continu (1000) selon la revendication 9, dans lequel la source de tension continue (1004) comporte au moins une batterie.

11. Circuit à courant continu (1000) selon la revendication 10, dans lequel le premier commutateur de précharge (1008) comporte au moins un premier thyristor et l'entrée de commande du premier commutateur de précharge (1008) correspond à la gâchette du premier thyristor, et comportant en outre au moins :
- une deuxième résistance électrique de limitation de courant (1010) couplée en série au premier thyristor ;
- des premier et deuxième commutateurs de coupure (1012, 1014) chacun couplé entre l'une des bornes de la source de tension continue (1004) et l'une des électrodes de la capacité de stockage (1002), au moins l'un des premier et deuxième commutateurs de coupure (1012, 1014) comportant un relais.

12. Circuit à courant continu (1000) selon la revendication 11, dans lequel l'un des premier et deuxième commutateurs de coupure (1012) est couplé en parallèle du premier thyristor et de la deuxième résistance électrique de limitation de courant (1010).

13. Circuit à courant continu (1000) selon la revendication 9, dans lequel :
- la source de tension continue (1004) comporte un convertisseur de tension AC/DC de type totem pole comprenant au moins deux transistors de conversion (1016, 1018) et au moins deux thyristors de conversion (1020, 1022) dont les gâchettes sont chacune couplées à une troisième résistance électrique de limitation de courant (1024, 1026) et un optocoupleur (1028, 1030) couplés en série l'un à l'autre et formant des premier et deuxième commutateurs de précharge (1008) ;
- le transformateur d'impulsions (102) du dispositif (100) comporte au moins un troisième secondaire (130) ;
- la première borne (112) du premier secondaire (106) du transformateur d'impulsions (102) du dispositif (100) est couplée à une électrode d'entrée d'un des optocoupleurs (1028) ; et
- une première borne (136) du troisième secondaire (130) du transformateur d'impulsions (102) du dispositif (100) est couplée à une électrode d'entrée de l'autre des optocoupleurs (1030).

14. Circuit à courant continu (1000) selon la revendication 9, dans lequel :
- la source de tension continue (1004) comporte un convertisseur de tension AC/DC de type Boost PFC à pont mixte comprenant au moins deux diodes de conversion (138, 140) et au moins deux thyristors de conversion (1020, 1022), ou au moins quatre thyristors de conversion (1020, 1022), dont les gâchettes sont chacune couplées à une troisième résistance électrique de limitation de courant (1024, 1026) et un optocoupleur (1028, 1030) couplés en série l'un à l'autre et formant des premier et deuxième commutateurs de précharge (1008) ; et
- la première borne (112) du premier secondaire (106) du transformateur d'impulsions (102) du dispositif (100) est couplée à une électrode d'entrée de chacun des optocoupleurs (1028, 1030).

15. Circuit à courant continu (1000) selon la revendication 9, dans lequel :
- la source de tension continue (1004) comporte un convertisseur de tension AC/DC de type Boost PFC à pont de diodes (150) ;
- le premier commutateur de précharge (1008) comporte au moins un premier thyristor, une troisième résistance électrique de limitation de courant (1024) et un optocoupleur (1028) couplés en série l'un à l'autre.
